# EUROPÄISCHE PATENTANMELDUNG

(11) **EP 0 659 822 A1**
(43) Veröffentlichungstag der Anmeldung: **28.06.1995**
(21) Anmeldenummer: 94119740.2
(22) Anmeldetag: 14.12.1994
(51) Int. Cl.: C08L 21/00, F16D 69/02

(54) **Verfahren zur Herstellung von thermostabilen Formkörpern**

(30) Priorität: 23.12.1993 DE 4344133
(71) Anmelder: HOECHST AKTIENGESELLSCHAFT, D-65926 Frankfurt am Main (DE)
(72) Erfinder: Wallenwein, Siegfried, D-64572 Büttelborn (DE); Sattelmeyer, Richard, Dr., D-65187 Wiesbaden (DE)

(57) **Zusammenfassung**

Thermostabile Formkörper für Bremsbeläge, Kupplungsbeläge und Schleifwerkzeuge werden hergestellt durch Formen und Vulkanisieren einer Mischung, enthaltend einen Natur- oder Synthesekautschuk in Gegenwart eines Schwefelfreien Vulkanisator-/Aktivator-Systems aus Phenolresolen, die mindestens 90 mol-% p-(C₃-C₁₂)-Alkylphenole, bezogen auf den gesamten Anteil an Phenolen, enthalten, und einer unter den Reaktionsbedingungen der Kautschuk-Vulkanisation als Brønsted- oder Lewis-Säure wirkenden Substanz oder Substanzmischung, bei einer Temperatur von 120 bis 250 °C.

## Beschreibung

Die vorliegende Erfindung betrifft ein Verfahren zur Herstellung von thermostabilen Formkörpern, die Natur- oder Synthesekautschuk in Gegenwart eines Schwefel-freien Vulkanisator-/Aktivator-Systems als Bindemittel enthalten, sowie nach diesem Verfahren hergestellte Formkörper und deren Verwendung als Reibbeläge.

An einen thermostabilen Formkörper, beispielsweise einen modernen Bremsbelag werden im wesentlichen folgende Anforderungen gestellt:
- gleichförmiges Reibverhalten unter allen Betriebsbedingungen, insbesondere wenn Temperatur und Bremsdruck zunehmen,
- geringe Reibungsschwankungen (kein Rucken),
- hohe Temperaturbeständigkeit,
- geringe Wärmeübertragung,
- gute Dauerwärmefestigkeit,
- niedrige Abriebsabnutzung an Bremstrommel- oder -scheibe,
- niedriger Geräuschpegel,
- Unempfindlichkeit gegen wechselnde Wetterbedingungen,
- Korrosionsfreiheit,
- Beständigkeit gegen Antriebsstoffe und Hydraulikflüssigkeiten,
- umweltfreundliche und kostengünstige Produktion unter Vermeidung arbeitshygienischer Probleme
- umweltfreundliche und kostengünstige Entsorgung.

Im allgemeinen setzen sich Reibbelagsrezepturen aus den folgenden Hauptrohstoffgruppen zusammen:

| | | |
|---|---|---|
| a) | anorganische und/oder organische Fasern: beispielsweise Glas, Basalt, Keramik, Diabas, Aramid, Kohlenstoff, Textil, Metallfasern, | vorzugsweise 20-60 Gew.-% |
| b) | anorganische oder organische Füllstoffe: beispielsweise Baryt, Kaolin, Magnesiumoxid, Calciumoxid, Aluminiumoxid, "Friction dusts", Ruße, | vorzugsweise 5-40 Gew.-% |
| c) | Metalle (Pulver, Späne, Wolle): beispielsweise Messing, Eisen, Kupfer, | vorzugsweise 5-60 Gew.-% |
| d) | Gleitmittel beispielsweise Antimonsulfid, Molybdändisulfid, Graphit, | vorzugsweise 0-5 Gew.-% |
| e) | Bindemittel: Phenolharze und/oder Kautschuk, | vorzugsweise 5-40 Gew.-% |
| f) | Vulkanisiermittel, Härter und Beschleuniger: Schwefel, Hexamethylentetramin, Benzothiazyl-2-cyclohexylsulfenamid, | vorzugsweise 1-10 Gew.-% |
| g) | gegebenenfalls Lösemittel: beispielsweise Alkohole. | |

Eine wesentliche Bedeutung für den Verbund derartig heterogener Mischungen kommt dem eingesetzten Bindemittel zu. In der Druckschrift EP-B 0 248 980 werden als Bindemittel für hochtemperaturbeständige Formstoffe spezielle Phenol-Formaldehyd-Novolake mit geringem Formaldehyd-Anteil vorgeschlagen, die mit Hexamethylentetramin ausgehärtet werden. Aus der Druckschrift EP-B 0 176 193 sind Reibungsmaterialien bekannt, in denen selbsthärtende Phenolresole als Bindemittel eingesetzt werden. Diese ausschließlich über Phenolharz gebundenen Formkörper zeichnen sich durch eine hohe Härte aus, weisen aber eine relativ geringe Elastizität auf, so daß infolge ihrer Sprödigkeit Probleme bei der Verarbeitung und bei Wechselbelastungen im Betrieb auftreten.

Die in DE-A 39 39 481 und DE-C 29 32 647 beschriebene Modifizierung von auf Phenolharz-Bindemitteln basierenden Reibmaterialien durch vulkanisierte Kautschukteilchen in Form von Gummiabfällen oder Latex ohne zusätzliche Vukanisationsmittel wirkt sich positiv auf das Reibverhalten aus. Eine deutliche Verbesserung der Elastizität des Formkörpers ist aber damit nicht zu erzielen, da auch diese Formkörper letztlich ausschließlich über Phenolharze gebunden sind.

Unter Mitverwendung eines Elastomer-Latexmaterials wird für Reibbeläge in DE-C 34 23 163 ein Bindemittel-System aus einem Butadien-Styrol-Vinylpyridin-Copolymer und einem Resorcin-Formaldehyd-Harz vorgeschlagen. Auch DE-C 28 32 464 setzt ein Mehrkomponentensystem aus Phenolharzen und Kautschuk als Bindemittel für Bremsbeläge ein. Mit diesen Systemen werden viele der an Reibbeläge gestellten Anforderungen schon weitgehend erfüllt. Ein großer Nachteil dieser Kautschuk-haltigen Bindemittelsysteme besteht jedoch darin, daß die Vulkanisation des Kautschuks durch Schwefel erfolgt. Der Verarbeitungsprozeß bereitet aufgrund der Geruchsbelästigung durch den Schwefel arbeitshygienische Probleme. Außerdem werden bei der Vulkanisation mit Schwefel notwendigerweise Beschleuniger eingesetzt. Bei Verwendung hochwirksamer sekundäre Aminstrukturen enthaltender Beschleuniger besteht jedoch die Gefahr der Bildung von Nitrosaminen. Außerdem erleiden die Formkörper, die mittels Schwefel vulkanisierte Kautschuk-Bindemittel enthalten, in erhöhtem Maß einen alterungsbedingten Rückgang der ursprünglich vorhandenen Elastizität (Vergleichsversuch).

Es ist grundsätzlich bekannt, zum Vulkanisieren von Kautschuk anstelle von Schwefel in p-Stellung blockierte Phenolharze einzusetzen (Rubber Chemistry and Technology, Vol 62, S. 107 ff, 1988).

Keines der bisher bekannten Verfahren zur Herstellung von thermostabilen Formkörpern führt zu Produkten, die alle Anforderungen, die gerade bei Verwendung der Formkörper als Bremsbeläge von den Kunden gewünscht werden, optimal erfüllen. Insbesondere die geforderte Kombination von Härte und Elastizität der Formkörper bei gleichzeitig hoher Temperaturbeständigkeit ist im Stand der Technik nicht bekannt.

Die Aufgabe der vorliegenden Erfindung bestand also darin, ein Verfahren zur Verfügung zu stellen, das die Herstellung von temperaturbeständigen Formkörpern mit verbesserten mechanischen Eigenschaften unter Einsatz von Natur- oder Synthesekautschukbindemitteln ohne die sonst übliche Vulkanisation mit Schwefel ermöglicht.

Erfindungsgemäß wird dazu als Bindemittel für den Formkörper ein Natur- oder Synthesekautschuk mit einem Vulkanisator-/Aktivator-System verwendet, das aus einem in p-Stellung mit einem (C₃-C₁₂)-Alkylrest blockierten Resol und einer unter den Reaktionsbedingungen als Brønsted- oder Lewis-Säure wirkenden Substanz oder Substanzmischung besteht. Überraschenderweise können bei Verwendung von p-Alkylphenolresolen anstelle von Schwefel als Vulkanisationsmittel deutlich bessere mechanische Eigenschaften der Formkörper erzielt werden.

Gegenstand der vorliegenden Erfindung ist also ein Verfahren zur Herstellung von thermostabilen Formkörpern durch Formen und Vulkanisieren einer Mischung, enthaltend einen Natur- oder Synthesekautschuk in Gegenwart eines Schwefel-freien Vulkanisator-/Aktivator-Systems aus Phenolresolen, die mindestens 90 mol-% p-(C₃-C₁₂)-Alkylphenole, bezogen auf den gesamten Anteil an Phenolen, enthalten, und einer unter den Reaktionsbedingungen der Kautschuk-Vulkanisation als Brønsted- oder Lewis-Säure wirkenden Substanz oder Substanzmischung, bei einer Temperatur von 120 bis 250 °C.

Nach dem erfindungsgemäßen Verfahren werden als Kautschuktypen vorzugsweise bekanntermaßen gegen Hitze und Chemikalien beständige Natur- und/oder Synthesekautschuke eingesetzt. Geeignet sind beispielsweise Natur-, Nitril-, Butyl-, Chlorbutyl-Kautschuk, Polychloropren, Ethylen-Propylen-Terpolymerisat sowie vorzugsweise Styrol-Butadien-Kautschuk und Copolymere aus Butadien und Acrylnitril.

Der Anteil des Kautschuk-Bindemittels beträgt 5 bis 50 Gew.-%, vorzugsweise 8 bis 30 Gew.-%, insbesondere 10 bis 20 Gew.-%, bezogen auf die Menge der zur Herstellung des Formkörpers eingesetzten nichtflüchtigen Komponenten.

Zur Vulkanisation der Kautschukkomponenten werden vorzugsweise p-(C₄-C₁₀)-, insbesondere p-(C₄-C₈)-Alkylphenolresole verwendet. Diese p-Alkylphenolresole sind nach bekannten Methoden herstellbar durch Kondensation von geeigneten Alkylphenolen mit Aldehyden, vorzugsweise mit Formaldehyd, vorzugsweise in Gegenwart basischer Katalysatoren. Die Aldehydkomponente liegt in den p-Alkylphenolresolen immer im Überschuß gegenüber dem p-Alkylphenol vor, bezogen auf den jeweiligen molaren Anteil.

Geeignete in den p-Alkylphenolresolen eingesetzte p-Alkylphenole sind beispielsweise p-Isopropylphenol, p-t-Butylphenol, p-Hexylphenol, p-t-Octylphenol, p-(2-Ethylhexyl)phenol, p-Nonylphenol. Die p-Alkylphenole können zusätzlich teilweise durch Chlor oder Brom substituiert sein. Die in dem eingesetzten p-Alkylphenolresol vorhandenen Methylolgruppen können auch teilweise durch Halogenmethylgruppen, insbesondere Chlormethyl- oder Brommethylgruppen, ersetzt sein.

Zu einem Anteil von weniger als 10 mol-%, insbesondere von weniger als 5 mol-%, des gesamten Anteils an Phenolen kann auch unsubstituiertes Phenol in den p-Alkylphenolresolen enthalten sein.

Die Menge des zur Vulkanisation des Kautschuks zugesetzten p-Alkylphenolresols beträgt erfindungsgemäß 5 bis 59, vorzugsweise 7 bis 49, insbesondere 10 bis 39 Gewichtsteile, bezogen auf 100 Gewichtsteile Kautschuk.

Zur Aktivierung der p-Alkylphenolresole werden erfindungsgemäß Substanzen oder Substanzmischungen eingesetzt, die unter den Reaktionsbedingungen der Vulkanisation als Brønsted- oder Lewis-Säure wirken. Unter aktivierenden Substanzmischungen werden vorzugsweise Systeme aus Halogen enthaltenden Verbindungen, insbesondere Polymeren, in Gegenwart von Zinkoxid verstanden. Beispiele für geeignete derartige Polymere sind Polychloropren (®Neoprene W), Chlorbutylkautschuk oder chlorsulfoniertes Polyethylen. Für den Fall der Aktivierung der Vulkanisation über Halogen enthaltende Verbindungen in Gegenwart von Zinkoxid beträgt die Menge solcher Verbindungen vorzugsweise 1 bis 20, insbesondere 2 bis 10 Gewichtsteile, bezogen auf 100 Gewichtsteile Kautschuk. Ein Teil oder die Gesamtmenge der benötigten Halogen enthaltenden Verbindungen kann dabei auch aus dem Kautschuk (Halogenkautschuk), dem Vulkanisationsmittel (Halogen enthaltendes p-Alkylphenolresol) oder weiteren für andere Zwecke zugesetzten Komponenten stammen. Der Anteil an Zinkoxid beträgt vorzugsweise 1 bis 15, insbesondere 2 bis 10 Gewichtsteile, bezogen auf 100 Gewichtsteile Kautschuk.

Alternativ können zur Aktivierung der p-Alkylphenolresole auch Lewis-Säuren, beispielsweise Zinnchlorid oder Zinkchlorid, oder organische oder anorganische Säuren, beispielsweise Phosphorsäure oder p-Toluolsulfonsäure, zugesetzt werden. Für diesen Fall beträgt die Menge der zugesetzten Lewis- oder Brønsted-Säure vorzugsweise 1 bis 10, insbesondere 2 bis 5 Gewichtsteile, bezogen auf 100 Gewichtsteile Kautschuk.

Vorzugsweise wird als weiteres Bindemittel ein Phenolharz eingesetzt. Geeignet sind insbesondere Novolake, die auf übliche Weise durch Kondensation von Phenolen und Aldehyden, vorzugsweise in Gegenwart saurer Katalysatoren erhältlich sind, beispielsweise ®Alnovol PN 322 (Hoechst AG). Die Härtung des Novolaks erfolgt mit üblichen Methylengruppen-Donatoren, beispielsweise mit Hexamethylentetramin oder mit Melaminharzen, beispielsweise ®Additol XT 911 oder XT 922 (Hoechst AG). Anstelle der Kombination aus Novolak und Härtungsmittel können auch bekannte selbsthärtende Resole verwendet werden. Die Novolake beziehungsweise Resole sind vorzugsweise auf Basis von Phenol und Formaldehyd aufgebaut, können aber auch substituierte Phenole oder Polyphenole enthalten.

Der Anteil des vorzugsweise zusätzlich eingesetzten Phenolharz-Bindemittels beträgt vorzugsweise 5 bis 30 Gew.-%, insbesondere 10 bis 20 Gew.-%, bezogen auf die Menge der zur Herstellung der Formkörper eingesetzten nichtflüchtigen Komponenten.

Weitere übliche Komponenten, die bei der Herstellung thermostabiler Formkörper nach dem erfindungsgemäßen Verfahren zum Einsatz kommen, sind unter den eingangs aufgeführten Reibbelagsrezepturen genannt. Art und Menge der Zusätze kann dem jeweiligen Verwendungszweck der Formkörper angepaßt werden.

Nach dem erfindungsgemäßen Verfahren werden alle eingesetzten Bestandteile zunächst gemischt, gegebenenfalls unter Zusatz eines geeigneten Lösemittels für eine oder mehrere der eingesetzten Komponenten. Das Mischen erfolgt mittels bekannter Verfahren beispielsweise durch Rühren und/oder Kneten.

Anschließend wird die erhaltene Mischung geformt. Dazu werden übliche Formgebungsmethoden eingesetzt. Beispielsweise wird die Mischung, gegebenenfalls unter Druck, in eine vorgegebene Form-Matrix eingefüllt oder auf eine geformte Unterlage gewalzt. Der erhaltene Vorformling wird dann durch Vulkanisation gehärtet. Dazu wird er auf Temperaturen von vorzugsweise 150 bis 200 °C, insbesondere 160 bis 180 °C, erhitzt. Das Erhitzen wird mindestens solange fortgesetzt, bis der Vulkanisationsvorgang abgeschlossen ist. Darüber hinaus können die Formkörper noch über längere Zeit getempert werden. Der Formgebungsschritt und die Vulkanisation können in separaten Arbeitsgängen bei verschiedenen Temperaturen oder vorzugsweise auch gleichzeitig in einem Arbeitsgang bei Temperaturen von vorzugsweise 150 bis 200 °C, insbesondere 160 bis 180 °C, durchgeführt werden, indem beheizbare Formgebungswerkzeuge eingesetzt werden. Nach dem Abkühlen kann der erhaltene Formkörper nachbehandelt werden, beispielsweise um die exakte Form einzustellen, Nuten einzufräsen oder die Oberfläche zu glätten beziehungsweise zu graphitieren.

Neben Vorteilen bei der Verarbeitung, insbesondere durch Wegfall der Geruchsbelästigung durch Schwefelverbindungen während der Vulkanisation, unterbleibt bei der Vulkanisation mit p-Alkylphenolresolen ferner weitestgehend eine Reversion des Kautschuks.

Die mechanischen Eigenschaften der nach dem erfindungsgemäßen Verfahren hergestellten Formkörper sind gegenüber denen üblicher Formkörper deutlich verbessert. Die mit p-Alkylphenolresolen vernetzte Kautschukmatrix weist eine mehr als doppelt so große Reißdehnung sowie eine deutlich höhere Winkelkerbzähigkeit auf als das mit Schwefel vernetzte System. Die Messung der mechanischen Werte an gealterten Prüfkörpern belegt eindeutig weitere Vorteile einer Vulkanisation mittels p-Alkylphenolresolen gegenüber der derzeit üblichen Vernetzung durch Schwefel. So fällt beispielsweise die Reißfestigkeit der Schwefelvernetzten Prüfkörper bei künstlicher Alterung auf ca. 76 % ab, während die p-Alkylphenolresol-vernetzten Prüfkörper keinen Abfall beziehungsweise sogar einen Anstieg derselben um ca. 21 % aufweisen.

Noch drastischere Unterschiede zeigen sich am alterungsbedingten Rückgang der Reißdehnung. Diese geht bei den mit Schwefel vulkanisierten Prüfkörpern um ca. 56 %, bei den p-Alkylphenolresol-vernetzten jedoch nur um ca. 13 % beziehungsweise 30 % der Ausgangsdehnung zurück.

Aufgrund ihres hervorragenden Eigenschaftsprofils können die nach dem erfindungsgemäßen Verfahren hergestellten thermostabilen Formkörper vorzugsweise zur Herstellung von Reibbelägen, insbesondere Bremsbelägen und Kupplungsbelägen, sowie von Schleifwerkzeugen verwendet werden.

### Beispiele

Die Erfindung wird durch die nachfolgenden Beispielen erläutert. Die in den Beispielen aufgeführten Teile und Prozente beziehen sich auf das Gewicht, sofern nicht anders vermerkt. Die genauen Zusammensetzungen der Mischungsbeispiele werden in Tabelle 1 angezeigt. Die ermittelten Meßwerte sind in den Tabellen 2 und 3 aufgeführt, Tabelle 3 zeigt die Werte nach künstlicher Wärmealterung der Prüfkörper (1 Stunde 150 °C danach 3 Tage 100 °C).

Alle Kautschukmischungen werden auf einer Laborwalze auf übliche Weise hergestellt. In der ersten Mischstufe wird der Kautschuk vorgelegt und Füllstoffe sowie halogenhaltige Polymere und Harze eingearbeitet. Die Mischungstemperatur wird kurzfristig auf 100 bis 110 °C eingestellt. In der anschließenden zweiten Stufe wird bei Temperaturen unter 100 °C das Vulkanisations-/Aktivatorsystem eingemischt. Als Kautschukkomponente findet ein Styrol-Butadien-Kautschuk (SBR) ®Buna Hüls EM 1620 Verwendung, der bereits in Lieferform 50 Teile Ruß auf 100 Teile Elastomer enthält. Der Phenolnovolak ist ein handelsüblicher Novolak (Alnovol PN 322) mit einem Schmelzbereich von 70 bis 80 °C/Kapillarverfahren DIN 53181 und einer Viskosität der 50%-igen Lösung in 1-Methoxypropanol-2 bei 23 °C von 900 bis 1250 mPa·s nach DIN 53177.

Die ebenfalls handelsüblichen p-Alkylphenolresole
®Vulkaresen PA 105 (p-t-Octylphenolresol, Hoechst AG) und
®Vulkaresen PA 510 (p-t-Octylphenolresol, Hoechst AG)
sind folgendermaßen charakterisiert:

| | Vulkaresen PA 105 | Vulkaresen PA 510 |
|---|---|---|
| Schmelzbereich, Kapillarverfahren DIN 53181 | 55-65 °C | 57-67 °C |
| Methylolwert | 9-12 % | 6-9 % |

Das erste nachfolgend aufgeführte Mischungsbeispiel dient als Vergleichsversuch mit Schwefel-vernetzter Matrix, während die Beispiele 1 und 2 im Sinne der Erfindung mit Hilfe von p-Alkylphenolresolen vulkanisierte Matrices mit verbesserten mechanischen Eigenschaften darstellen.

**Tabelle 1**

| **Matrixmischungen** | | | |
|---|---|---|---|
| | Vergleich | Beispiel 1 | Beispiel 2 |
| Buna Hüls EM 1620 (2/3 Styrol-Butadien-Kautschuk / 1/3 Ruß) | 150 Teile | 150 Teile | 150 Teile |
| Neoprene W (Polychloropren) | --- | 5 Teile | 5 Teile |
| Zinkoxid | 5 Teile | 5 Teile | 5 Teile |
| Stearinsäure | 2 Teile | --- | --- |
| Alnovol PN 322 (Phenolnovolak) | 18 Teile | 18 Teile | 18 Teile |
| Vulkaresen PA 105 (p-t-Octylphenolresol) | --- | 30 Teile | --- |
| Vulkaresen PA 510 (p-t-Octylphenolresol) | --- | --- | 30 Teile |
| Schwefel | 10 Teile | --- | --- |
| Hexamethylentetramin | 2 Teile | 2 Teile | 2 Teile |
| Benzothiazyl-2-cyclohexylsulfenamid | 1,5 Teile | --- | --- |

**Tabelle 2**

| Meßwerte, ermittelt an ungealterten Proben, Prüfkörper einheitlich 60 Minuten bei 180 °C vulkanisiert. | | | | |
|---|---|---|---|---|
| | | Vergleich | Beispiel 1 | Beispiel 2 |
| *Mooney-Plastizität ML (1+4) 120 °C | [ME] | 33 | 32 | 28 |
| Reißfestigkeit (DIN 53504) | [MPa] | 17 | 16 | 14 |
| Reißdehnung (DIN 53504) | [%] | 48 | 112 | 320 |
| Härte Shore A (DIN 53505) | [E] | 92 | 91 | 88 |
| Winkelkerbzähigkeit | [N/mm] | 14 | 20 | 32 |

| | | | | |
|---|---|---|---|---|
| * gemessen an der unvulkanisierten Mischung | | | | |

**Tabelle 3**

| Meßwerte, ermittelt nach Wärmealterung (1 Stunde 150 °C und 3 Tage 100 °C) der Prüfkörper. | | | | |
|---|---|---|---|---|
| | | Vergleich | Beispiel 1 | Beispiel 2 |
| Reißfestigkeit (DIN 53504) | [MPa] | 13 | 16 | 17 |
| Reißdehnung (DIN 53504) | [%] | 21 | 97 | 223 |
| Härte Shore A (DIN 53505) | [E] | 94 | 92 | 91 |
| Winkelkerbzähigkeit | [N/mm] | 13 | 19 | 27 |

## Patentansprüche

1. Verfahren zur Herstellung von thermostabilen Formkörpern durch Formen und Vulkanisieren einer Mischung, enthaltend einen Natur- oder Synthesekautschuk in Gegenwart eines Schwefel-freien Vulkanisator-/Aktivator-Systems aus Phenolresolen, die mindestens 90 mol-% p-(C₃-C₁₂)-Alkylphenole, bezogen auf den gesamten Anteil an Phenolen, enthalten, und einer unter den Reaktionsbedingungen der Kautschuk-Vulkanisation als Brønsted- oder Lewis-Säure wirkenden Substanz oder Substanzmischung, bei einer Temperatur von 120 bis 250 °C.

2. Verfahren nach Anspruch 1, dadurch gekennzeichnet, daß als Synthesekautschuke Styrol-Butadien-Kautschuke und/oder Copolymere aus Butadien und Acrylnitril zum Einsatz kommen.

3. Verfahren nach Anspruch 1, dadurch gekennzeichnet, daß der Anteil des Kautschuk-Bindemittels 5 bis 50 Gew.-%, bezogen auf die Menge der zur Herstellung des Formkörpers eingesetzten nichtflüchtigen Komponenten, beträgt.

4. Verfahren nach Anspruch 1, dadurch gekennzeichnet, daß als Vulkanisator auf 100 Gewichtsteile Kautschuk 5 bis 59 Gewichtsteile p-(C₄-C₁₀)-Alkylphenolresole eingesetzt werden.

5. Verfahren nach Anspruch 1, dadurch gekennzeichnet, daß die Methylolgruppen der p-Alkylphenolresole teilweise halogeniert sind.

6. Verfahren nach Anspruch 1, dadurch gekennzeichnet, daß als Aktivator auf 100 Gewichtsteile Kautschuk 1 bis 20 Gewichtsteile Halogen-haltige Polymere und 1 bis 15 Gewichtsteile Zinkoxid eingesetzt werden.

7. Verfahren nach Anspruch 1, dadurch gekennzeichnet, daß als Aktivator auf 100 Gewichtsteile Kautschuk 0,1 bis 10 Gewichtsteile Lewis-Säuren oder Brønsted-Säuren eingesetzt werden.

8. Verfahren nach Anspruch 1, dadurch gekennzeichnet, daß als weiteres Bindemittel Phenolharze eingesetzt werden.

9. Verfahren nach Anspruch 1, dadurch gekennzeichnet, daß als weiteres Bindemittel ein Phenol-Novolak in einem Anteil von 5 bis 30 Gew.-%, bezogen auf die Menge der zur Herstellung des Formkörpers eingesetzten nicht-flüchtigen Komponenten, eingesetzt wird.

10. Verfahren nach Anspruch 1, dadurch gekennzeichnet, daß Formgebung und Vulkanisation gleichzeitig bei einer Temperatur von 150 bis 200 °C erfolgen.

11. Thermostabiler Formkörper, herstellbar nach Anspruch 1, enthaltend ein p-(C₃-C₁₂)-Alkylphenolresol-vulkanisiertes Kautschuk-Bindemittel sowie weitere übliche Zusätze.

12. Verwendung der thermostabilen Formkörper nach Anspruch 13 als Reibbelag in Bremsen und Kupplungen und als Schleifwerkzeuge.
